(19) Europäisches Patentamt
European Patent Office
Office européen des brevets

(11) EP 2 316 267 B1

(12) **EUROPEAN PATENT SPECIFICATION**

(45) Date of publication and mention of the grant of the patent:
**09.10.2019 Bulletin 2019/41**

(21) Application number: **09804950.5**

(22) Date of filing: **03.08.2009**

(51) Int Cl.:
*A01N 31/08* $^{(2006.01)}$ *A01N 65/22* $^{(2009.01)}$
*A01P 3/00* $^{(2006.01)}$ *A23L 3/349* $^{(2006.01)}$

(86) International application number:
**PCT/JP2009/063764**

(87) International publication number:
**WO 2010/016467 (11.02.2010 Gazette 2010/06)**

(54) **ANTIBACTERIAL AGENT AND DISINFECTING METHOD**

ANTIBAKTERIELLER WIRKSTOFF UND DESINFIZIERUNGSVERFAHREN

AGENT ANTIBACTÉRIEN ET PROCÉDÉ DE DÉSINFECTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.08.2008 JP 2008201147**

(43) Date of publication of application:
**04.05.2011 Bulletin 2011/18**

(73) Proprietors:
- **Mitsubishi Chemical Corporation**
  **Tokyo 100-8251 (JP)**
- **Mitsubishi-Kagaku Foods Corporation**
  **Tokyo 105-0011 (JP)**

(72) Inventors:
- **KIDO, Hirotsugu**
  **Yokohama-shi**
  **Kanagawa 227-8502 (JP)**
- **II. Shigeo**
  **Yokohama-shi**
  **Kanagawa 227-8502 (JP)**

(74) Representative: **Ter Meer Steinmeister & Partner Patentanwälte mbB**
**Nymphenburger Straße 4**
**80335 München (DE)**

(56) References cited:
**JP-A- 1 311 018** **JP-A- 62 056 422**
**JP-T- 2007 503 383** **US-A1- 2004 131 709**

- **ULUBELEN A ET AL: "Diterpenoids from the roots of Salvia bracteata", PHYTOCHEMISTRY, PERGAMON PRESS, GB, vol. 52, no. 8, 1 December 1999 (1999-12-01), pages 1455-1459, XP004291152, ISSN: 0031-9422, DOI: 10.1016/S0031-9422(99)00453-7**
- **M.POLITI ET AL.: "Antimicrobial Diterpenes from the Seeds of Cephalotaxus harringtonia var. drupacea", PLANTA MEDICA, vol. 69, no. 5, 1 May 2003 (2003-05-01), pages 468-470, XP55019273, ISSN: 0032-0943, DOI: 10.1055/s-2003-39713**
- **TOPCU GULACTI ET AL.: 'Biological activity of diterpenoids isolated from Anatolian Lamiaceae Plants' RECORDS OF NATURAL PRODUCTS vol. 1, no. IS.1, 2007, pages 1 - 16, XP008141723**
- **KOBAYASHI KOJI ET AL.: 'Antibacterial activity of pisiferic acid and its derivatives against gram-negative and -positive bacteria' AGRICULTURAL AND BIOLOGICAL CHEMISTRY vol. 52, no. IS.1, 1988, pages 77 - 83, XP008141721**
- **MIKRE ET AL.: 'Volatile constituents and antioxidant activity of essential oils obtained from important aromatic plants of Ethiopia' JOURNAL OF ESSENTIAL OIL BEARING PLANTS vol. 10, no. 6, 2007, pages 465 - 474, XP008141743**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to an antibacterial agent. More particularly, it relates to an antibacterial agent as defined in claim 1.

BACKGROUND ART

It is known from recent studies that listeriosis in humans caused by the genus *Listeria* particularly *Listeria monocytogenes* relates to ingestion of various foods particularly soft cheese, pâté, ham and other prepackaged butcher meat and poultry products (e.g. studies by PHLS (Public Health Labovatory Service) on 16 food chain restaurants (Non-Patent Document 1)). Further, the main contaminant source of the genus *Listeria* is generally considered to be food manufacturers.
*Listeria monocytogenes* which is a food-borne pathogenic bacterium, causes about 70 deaths annually in Japan, which is higher than double the deaths by other food-borne pathogenic bacteria. Further, in the United States, as of 2000, the number of deaths by *Listeria* food poisoning amounted to about 500, and the damage by *Listeria monocytonegenes* is comparable to those by *Salmonella* and 0157 which is an enterohemorrhagic strain of the bacterium *Escherichia coli.*
On the other hand, hop acid and an acid similar to hop acid have been recognized as a bacteria inhibitor (Patent Document 1).
Compound (1) below is known as antibacterial from M.POLITI ET AL.: "Antimicrobial Diterpenes from the Seeds of Cephalotaxus harringtonia var. drupacea", PLANTA MEDICA, vol. 69, no. 5, 1 May 2003, pages 468-470 and from KOBAYASHI KOJI ET AL.: "Antibacterial activity of pisiferic acid and its derivatives against gram-negative and -positive bacteria", AGRICULTURAL AND BIOLOGICAL CHEMISTRY, vol. 52, no. IS.1, 1988, pages 77-83. The latter also discloses antibacterial properties of compound (2) below. The compound (1) below is found in labiatae (see e.g. ULUBELEN A ET AL: "Diterpenoids from the roots of Salvia bracteata", PHYTOCHEMISTRY, vol. 52, no. 8, 1 December 1999, pages 1455-1459, TOPCU GULACTI ET AL.: "Biological activity of diterpenoids isolated from Anatolian Lamiaceae Plants", RECORDS OF NATURAL PRODUCTS, vol. 1, no. IS.1, 2007, pages 1-16 and MIKRE ET AL.: "Volatile constituents and antioxidant activity of essential oils obtained from important aromatic plants of Ethiopia", JOURNAL OF ESSENTIAL OIL BEARING PLANTS, vol. 10, no. 6, 2007, pages 465-474).

PRIOR ART DOCUMENT

PATENT DOCUMENT

Patent Document 1: JP-A-8-502887

NON-PATENT DOCUMENT

Non-Patent Document 1: *Listeria* Monocytogenes in Prepacked Ready-To-Eat Sliced Meat, S. Velani and R. J. Gilbert, PHLS Microbiology Digest, vol. 7 (1977)

DISCLOSURE OF THE INVENTION

PROBLEMS TO BE SOLVED BY THE INVENTION

However, antibacterial agents (particularly antibacterial agents derived from natural products) have been known to differ in the antibacterial activity depending on the type of the microorganism, and although conventional antibacterial agents have antibacterial activity against *Salmonella* and the enterohemorrhagic strain of *Escherichia coli,* not so many antibacterial agents effective against gram-positive bacteria such as bacteria belonging to the genus *Listeria,* particularly antibacterial agents derived from natural products that are safe even when added to foods and the like, have been known.
Further, hop acid (particularly β acid-containing hop extract) which is an antibacterial agent derived from natural products has insufficient antibacterial activity against the genus *Listeria.* Further, hop acid which itself has a specific odor, is inappropriate as an antibacterial agent to be added to foods.
That is, the object of the present invention is to use an antibacterial agent having antibacterial activity against gram-positive bacteria, substantially free from odor, and derived from natural products so that it is safe even when added to foods and the like.

MEANS TO SOLVE THE PROBLEMS

The present inventors have conducted extensive studies to solve the above problems and as a result, found that a certain compound contained in a labiatae plant extract, for example, a rosemary extract, has excellent antibacterial activity against gram-positive bacteria such as bacteria belonging to the genus *Listeria.* The present invention has been accomplished on the basis of this discovery.

That is, the present invention relates to the subject matter of the independent claim. The present disclosure provides the following [1] to [8].

[1] Use of an antibacterial agent for disinfection of foods against bacteria belonging to the genus Listeria, wherein the antibacterial agent comprises as an active ingredient a compound represented by the following formula (2), extracted from rosemary.

[2] The use according to [1] or [2], wherein the concentration of the antibacterial agent added to a food is from 0.01 to 10,000 ppm, as the total amount of either one or both of the compounds represented by the above formulae (1) and (2).

[4] The use according to any one of [2] or [3], wherein the compounds represented by the formulae (1) and (2) are contained in the antibacterial agent in an amount of at least 50 ppm.

[5] The use according to any one of [2] or [3], wherein the total content of either one or both of the compounds represented by the formulae (1) and (2) in the antibacterial agent is at most 5 wt%.

[6] The use according to any one of [2] to [5], wherein the compounds represented in the formulae (1) and (2) each have an antibacterial activity against Listeria monocytogenes at a concentration of 50 ppm.

[7] The use according to any one of [1] to [6], wherein the antibacterial agent has the compound represented by the formula (2) dissolved or dispersed in water, an alcohol, edible fat oil, or a mixture thereof.

[8] The use according to any one of [1] to [7], wherein the antibacterial agent further contains a hop extract.

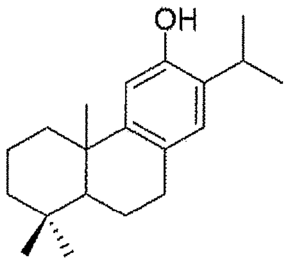
(1)
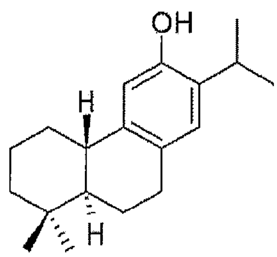
(2)

EFFECTS OF THE INVENTION

By using the antibacterial agent of the present invention, sufficient antibacterial effects are exhibited against gram-positive bacteria such as the genus *Staphylococcus,* the genus *Lactobacillus,* the genus *Listeria,* the genus *Alicyclobacillus* and the genus *Bacillus,* particularly bacteria belonging to the genus *Listeria,* only with a very small addition amount to a sample (object). The antibacterial agent is widely useful in the field of foods, beverage, medical and pharmaceutical supplies, and environmental safety, and is particularly useful as a food preservative, and the disinfecting method of the present invention is particularly useful as a method of storing foods.

BEST MODE FOR CARRYING OUT THE INVENTION

Now, the present invention will be described in detail.

The antibacterial agent used in the present invention comprises as an active ingredient a specific compound contained in a labiatae plant extract, i.e. either (2) alone or both of compounds represented by the above formulae (1) and (2). Both the compounds represented by the formulae (1) and (2) are water-insoluble compounds contained in a labiatae plant extract.

In the present invention, the labiatae plant extract is an extract from rosemary extract.

Rosemary, sage, thyme and oregano are plants belonging to the same order and contain the same components. Further, they are plants belonging to the family Labiatae, and extracts from plants belonging to the same family contain substantially the same components but the proportion of the components may vary.

Further, the portion to be subjected to extraction is not limited and may be at least one portion selected from the group consisting of leaves, stems, flowers and roots, and is properly selected in accordance with the type of the labiatae plants, the extraction method, the extraction conditions, etc. Particularly an extract obtained from leaves or

stems is preferred.

The labiatae plant extract in the present invention is not limited so long as it is a labiatae plant extract, and is particularly preferably a water-insoluble extract. It is more preferably a water-insoluble labiatae plant extract having a solubility of less than 0.1 g in 100 g of water at 25°C, preferably a water-insoluble rosemary extract. The solubility in water is preferably at most 0.05 g, more preferably at most 0.01 g in 100 g of water at 25°C.

The labiatae plant extract can be prepared, for example, by the following method, but the method is not limited to the following method.

Firstly, leaves and stems of the above labiatae plant, e.g. rosemary, are dried and subjected to extraction with hexane, ethyl acetate, ethanol, an ether, alkali water, neutral water, acid water or a mixture thereof. Otherwise, extraction is possible with a supercritical or subcritical fluid, for example, such as carbon dioxide in such a state. A preferred extraction method is an extraction method with hexane, hexane/ethanol, ethanol or ethanol/water.

Usually, extraction is carried out using the above solvent in an amount of 10 times per 1 kg of the labiatae plant such as rosemary at from 5 to 80°C, preferably at from 40 to 70°C with stirring, followed by filtration to obtain a filtrate. Further, the residue is washed with the same solvent several times to obtain a filtrate. These filtrates are mixed, and water in the same amount as the mixed filtrate is added to precipitate a deposit, activated carbon in an amount one tenth the amount of the filtrate is added, the filtrate is stirred for 1 hour and preserved at a cold place overnight, and the deposit is removed by filtration. This operation is repeatedly carried out several times, and the obtained filtrates are mixed and concentrated under reduced pressure to obtain a water-insoluble labiatae plant extract.

Further, extraction without use of a liquid for extraction is possible. For example, a labiatae plant is heated and pressed or squeezed to obtain a labiatae plant extract.

The method for extraction of the compound of the above formula (1) or (2) constituting the antibacterial agent of the present invention is not limited. For example, the above labiatae plant extract is made to flow through an ODS (octadecylsilyl silica gel) column (30 mm in diameter × 120 mm) with an eluent $CH_3CN$, and then components remaining in the resin is advanced by chloroform/methanol=100/0 or 99/1 (volume ratio) to obtain a crude fraction extract when chloroform 100% is made to flow. Further, by washing with chloroform/methanol=99/1 (volume ratio), a crude fraction extract can be obtained. There are two types of components obtainable by this method, one is ferruginol (the compound of the above formula (1), hereinafter this will sometimes be referred to as "Terpenoid-1 "), and the other is a component novel as a natural product (the compound of the above formula (2), hereinafter this will sometimes be referred to as "Terpenoid-2").

These compounds can be identified by NMR ($^1$H-NMR) ($^1$H-nuclear magnetic resonance). The NMR data and the mass spectrum data of the compound of the formula (2) are as follows.

Terpenoid-2

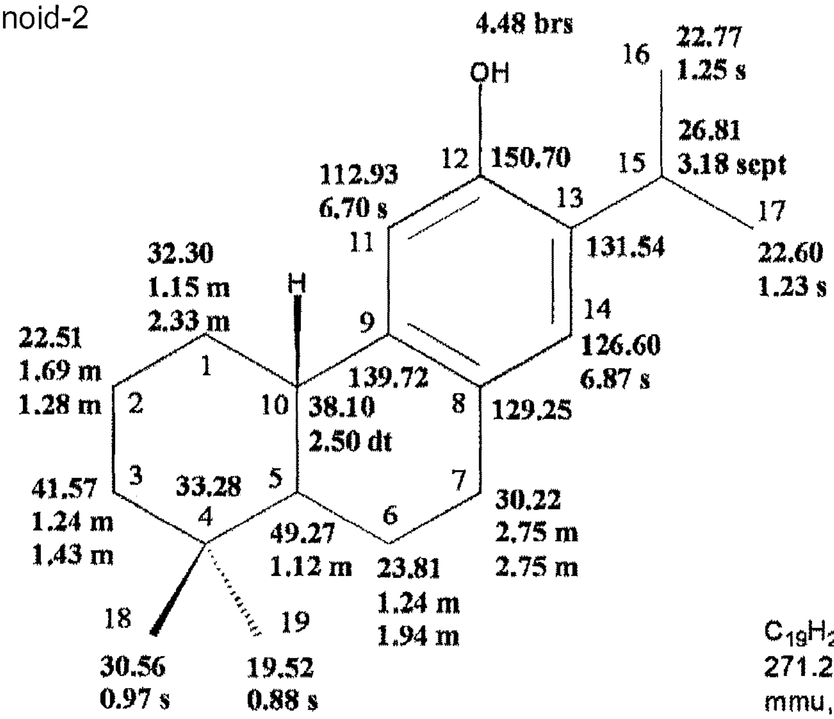

$C_{19}H_{28}O$
271.2130
mmu, -1.0

In the present invention, the compounds represented by the above formulae (1) and (2) are an extract. The present disclosure also contemplates the case that they may be a synthetic compound. In other words, the antibacterial

agent of the present disclosure is not limited to an extract from a labiatae plant so long as it contains the compound of the above formula (1) or (2). In a case of using an extract, the extract may be used as an antibacterial agent as it is, but the extract is preferably concentrated, isolated and purified. Particularly, it is possible to increase the concentration of the compound of the above formula (1) or (2) by extracting the compound of the above formula (1) or (2) from the labiatae plant extract, followed by at least one step selected from the group consisting of concentration, extraction, precipitation, isolation and purification to obtain the compound of the above formula (1) or (2), whereby the antibacterial properties aimed in the present invention can more remarkably be exhibited.

These two compounds have antibacterial activity against gram-positive bacteria particularly bacteria belonging to the genus *Listeria,* and can be used as an active ingredient of an antibacterial agent.

From labiatae plants, various terpenoids have already been isolated and identified. Among them, carnosic acid is known to have an anti-listeria effect. However, that the above Terpenoid-1 and Terpenoid-2 are an active ingredient for antibacterial activity of a water-insoluble labiatae plant extract and that these compounds have excellent antibacterial activity particularly against bacteria belonging to the genus *Listeria,* are first found in the present invention as far as the present inventors are aware. Further, Terpenoid-2 is a natural product, and its antibacterial effect is also found in the present invention.

The antibacterial agent used in the present invention may be used in any formulation such as a solution, a dispersion, a powder or granules. Accordingly, it can be used as a composition containing the compound represented by the above formula (1) or (2). In a case where the antibacterial agent used in the present invention is in the form of a solution or a dispersion, considering convenience at the time of use, a solution or dispersion having the compound represented by the above formula (1) or (2) dissolved or dispersed in water, an alcohol such as ethanol, edible fat or oil, or a mixture thereof may preferably be used.

In a case where the antibacterial agent used in the present invention is in the form of a composition, the content of the compound represented by the above formula (1) or (2) is not limited, but the composition preferably contains at least either one of these compounds in an amount of usually at least 50 ppm, preferably at least 100 ppm, more preferably at least 200 ppm. If the content of the compound in the composition is less than the above lower limit, no sufficient effect as an antibacterial agent may sometimes be obtained. The upper limit of the content of the compound in the composition is not limited, however, since the antibacterial agent used in the present invention has a sufficient effect only with a very slight amount, a sufficient antibacterial effect can be obtained even with a content of usually at most 5 wt%, further at most 2 wt%, particularly at most 1 wt%.

Further, in a case where the compounds of the above formulae (1) and (2) are used in combination, the total content of these compounds in the composition is also not limited, and it is usually at least 50 ppm, preferably at least 100 ppm, more preferably at least 200 ppm. In a case where the total content of these compounds in the composition is less than the above lower limit, no sufficient effect as an antibacterial agent may sometimes be obtained. The upper limit of the total content of these compounds in the composition is not limited, however, since the antibacterial agent used in the present invention has a sufficient effect even with a very small amount, a sufficient antibacterial effect can be obtained even with a content of usually at most 5 wt%, further at most 2 wt%, particularly at most 1 wt%. In a case where the total content of these compounds in the composition exceeds the above upper limit, there may be a case where it is an amount sufficient to obtain a required antibacterial effect.

As described above, as labiatae plant extracts, known substances such as terpenoids have already been isolated and identified. These components can be obtained by adjusting the extraction solvent, the extraction conditions, etc. in the same manner as the above extraction and fractionating method to obtain Terpenoid-1 and Terpenoid-2. As components contained in the labiatae plant extract, as a water-insoluble extract, 7$\alpha$-ethoxyrosmanol, carnosol, carnosic acid (12-methoxy-trans-carnosic acid), rosmanol, epirosmanol, betulin or betulinic acid may, for example, be mentioned. One or more of these components may be combined and incorporated in the composition in combination. When at least one component selected from the group consisting of rosmanol, carnosil, carnosic acid and betulinic acid is used as a component used in combination with Terpenoid-1 and/or Terpenoid-2, the antibacterial effect of the antibacterial agent used in the present invention may sometimes be enhanced. Further, a water-soluble labiatae plant extract may be used in combination in the composition, and for example, rosmalinic acid may, for example, be mentioned.

Further, for the antibacterial agent of the present invention, as the case requires, an emulsifier, an extender or the like may be added.

The emulsifier may, for example, be a polyglyceryl fatty acid ester such as polyglyceryl laurate, polyglyceryl myristate, polyglyceryl palmitate, polyglyceryl stearate, polyglyceryl oleate or polyglyceryl behenate; a sucrose fatty acid ester such as sucrose octanoate, sucrose decanoate, sucrose laurate, sucrose myristate, sucrose palmitate, sucrose stearate or sucrose oleate; a polysorbate such as polysorbate 40, 60, 65 or 80; or lecithine degradation product, and two or more of them may be used in combination. The content of the emulsifier is not limited, and is usually from 0.001 to 1,000 wt%, preferably from 0.01 to 90 wt%, more preferably from 0.1 to 50 wt%, further preferably from 1 to 20 wt% to the total amount of Terpenoid-1 and Terpenoid-2.

The extender may, for example, be dextrin, $\alpha$-cydodextrin, $\beta$-cydodextrin, $\gamma$-cyclodextrin, modified starch or a

saccharide such as sucrose or lactose; a sugar alcohol such as oligotose, trehalose, xylitol or erythritol; or a triterpene such as betulinic acid or a betulinic acid ester derivative, and two or more of them may be used in combination. The content of the extender is not particularly limited and is usually from 0.01 to 1,000 wt%, preferably from 0.1 to 90 wt%, more preferably from 0.5 to 50 wt%, further preferably from 1 to 20 wt% to the total amount of Terpenoid-1 and Terpenoid-2.

In the present invention, another antioxidant such as vitamin C, tocopherol, vitamin P, chlorogenic acid, coffee bean extract, sunflower extract, grape seed extract, $\alpha$-G rutin, catechin, green tea extract or rosemary extract may be used in combination. Two or more of them may be used in combination, and the content is not limited, and is usually from 0.01 to 1,000 wt%, preferably from 0.1 to 50 wt%, more preferably from 0.5 to 30 wt%, further preferably from 1 to 20 wt%, to the total amount of Terpenoid-1 and Terpenoid-2.

The antibacterial agent used in the present invention has effective antibacterial activity against microorganisms, and is particularly preferably used against gram-positive bacteria such as bacterias belonging to any genus selected from the genus *Staphylococcus,* the genus *Lactobacillus,* the genus *Listeria,* the genus *Alicyclobacillus* and the genus *Bacillus.*

Particularly, the antibacterial agent used in the present invention has a remarkable effect against bacteria belonging to the species selected from the group consisting of *Staphylococcus aureus, Lactobacillus plantarum, Listeria monocytogenes, Alicyclobacillus acidoterrestris* and *Bacillus subtilis.*

Further, the antibacterial agent comprising the compound represented by the formula (1) or (2) as an active ingredient is particularly effective as an antibacterial agent against bacterial belonging to the genus *Listeria,* such as *Listeria monocytogenes.*

The antibacterial agent used in the present invention can be widely used in the fields of foods, beverage, medical and pharmaceutical supplies, and environmental safety, and is particularly useful as a food preservative. By adding the antibacterial agent used in the present invention to various samples in such fields, antibacterial activity can be exhibited in the samples. In the present invention, a sample means an object to which the antibacterial agent of the present invention is applied.

As described above, an antibacterial agent extracted from natural products, having high antibacterial activity against bacteria belonging to the genus *Listeria,* and free from an unpleasant odor, has not been confirmed except for the antibacterial agent used in the present invention.

As a sample to which the antibacterial agent used in the present invention is added, foods in which microorganisms will easily grow are effective, and their specific examples include fish, meat and fat and oil processed foods. Particularly, the antibacterial agent used in the present invention can be preferably used for fish, meat, and fat and oil processed foods, which are likely to be deteriorated, and fish, meat, and fat and oil processed foods which are stored for a long period of time. Their specific examples include fresh fish, dried fish, overnight dried fish, dried seasoned fish, shellfish, red snapper, crustacean, minced fish, fish paste products, delicacies, fish sausages, salt cured products, dried laver, seaweed foods, chicken, pork, beef, mutton, sausages, ham and their processed products. Further, the antibacterial agent used in
the present invention can be applied not only for human foods but also pet foods and foodstuff. Further, it can be used as an antibacterial agent not only for meat and fish but also for prevention of decay of agricultural products (such as vegetables, root vegetables and fruits) produced utilizing the soil.

The concentration of the antibacterial agent used in the present invention added to a sample is usually from 0.01 to 10,000 ppm, preferably from 0.1 to 5,000 ppm, more preferably from 1 to 1,000 ppm as the total amount of either one or both of the compounds represented by the above formulae (1) and (2).

Further, the antibacterial agent used in the present invention may be used in combination with other antibiotics such as carnosic acid already known as a labiatae plant extract, hop acid which is a hop extract, niacin (niacin A, niacin Z), polylysine, milt protein or lysozyme, thereby to obtain an antibacterial agent having more excellent antibacterial activity.

Particularly a combined use of the antibacterial agent used in the present invention with a hop extract such as hop acid is useful as an antibacterial agent derived from natural products, whereby the specific odor of hop acid is reduced, and high antibacterial property will be achieved.

The antibacterial agent used in the present invention is useful not only for disinfection of foods but also as a microbicide used in e.g. a food handling environment. Specifically, it can be used as a microbicide to keep hands and clothes of food handlers, cooking devices, the kitchen, etc. clean. In the case of such an application, it is preferably used in the form of a powder, a liquid, a spray or the like.

## EXAMPLES

Now, the present invention will be described in further detail with reference to Examples.

EXPERIMENTAL EXAMPLE 1

(Preparation of water-insoluble rosemary extract)

To 1 kg of rosemary, 10 L of 50 wt% hydrous ethanol was added, followed by heat reflux for 3 hours, and the liquid was subjected to filtration in the warm conditions to obtain a filtrate. The residue was further subjected to extraction treatment twice with 6 L of 50 wt% hydrous ethanol in the same manner to obtain a filtrate. These obtained filtrates were mixed, and 5 L of water was added to precipitate a deposit. 100 g of activated carbon was added thereto, and the mixture was stirred for 1 hour, stored at a cold place overnight and subjected to filtration to obtain a mixture of the deposit and the activated carbon. 4 L of ethanol was added to the mixture, followed by heat reflux for 3 hours, and the liquid was subjected to filtration in the warm conditions to obtain a filtrate. The residue was further subjected to extraction treatment twice with 2.4 L of ethanol in the same manner to obtain a filtrate. These filtrates were mixed and concentrated under reduced pressure to distill ethanol off thereby to obtain a powdery water-insoluble rosemary extract (content of carnosol and carnosic acid: 24.9 wt%).

(Isolation and identification of active ingredient of water-insoluble rosemary extract)

The water-insoluble rosemary extract was made to flow through an ODS (octadecylsilyl silica gel) column (30 mm in diameter × 120 mm) with acetonitrile as an eluent, and components remaining in the resin was advanced with chloroform/methanol (volume ratio)=100/0, 99/1 to obtain a crude fraction rosemary extract when chloroform 100% was made to flow. Further, after washing with chloroform/methanol (volume ratio)=99/1, two types of components were obtained. These components were subjected to structural analysis by $^1$H-NMR and as a result, it was found that one is ferruginol (Terpenoid-1, compound of the formula (1)) and the other is a component novel as a natural product (Terpenoid-2, compound of the formula (2)).

The NMR ($^1$H-NMR) data and the mass spectrum data of Terpenoid-2 are as follows.

Terpenoid-2

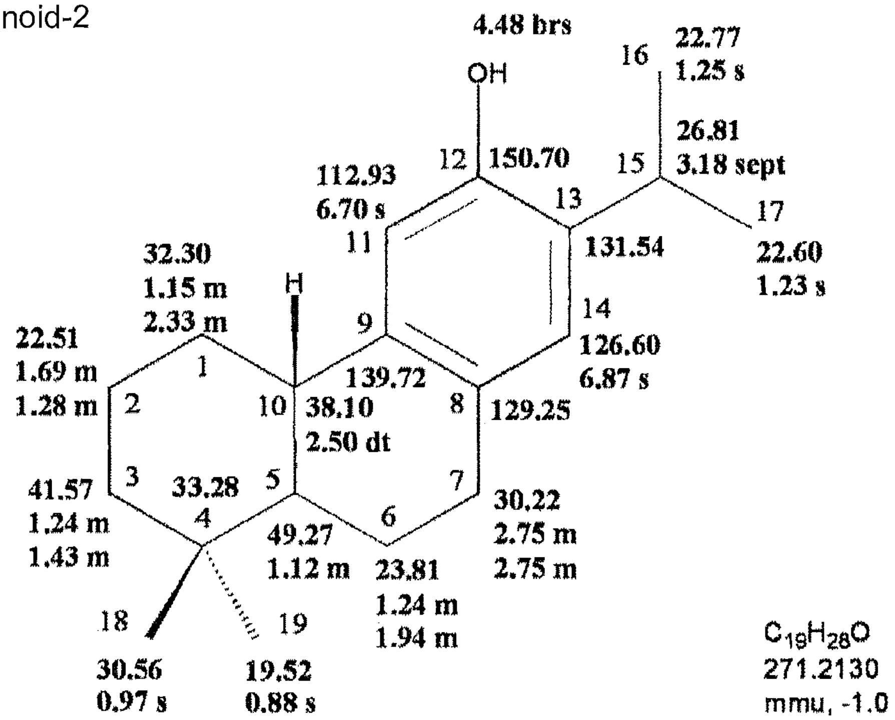

$C_{19}H_{28}O$
271.2130
mmu, -1.0

(Antibacterial activity against *Listeria monocytogenes*)

The components (Terpenoid-1 and Terpenoid-2) isolated from the water-insoluble rosemary extract were dissolved in DMSO (dimethylsulfoxide) at a concentration of 2,000 ppm to obtain samples for antibacterial activity test.

The antibacterial test was carried out as follows using *Listeria monocytogenes* JCM2873.

(1) Preparation of culture fluid

8.95 ml of Mueller Hinton Broth (MHB) culture medium was put in a test tube and sterilized in an autoclave. The culture medium concentration was adjusted to achieve a specified concentration when 50 μl of the sample was added.

(2) Preparation of bacteria liquid

*Listeria monocytogenes* JCM2873 was cultured by shake culture at 37°C for 1 day in the MHB culture medium, and diluted to an appropriate bacteria concentration ($3.1 \times 10^4$ cfu/ml) by the MHB culture medium.

(3) Antibacterial test

To the test tube in which 8.95 ml of the MHB culture medium prepared in the above (1) was put, 50 μl of the sample and 1 ml of the bacteria liquid prepared in the above (2) were added and stirred (isolated component concentration at the time of test: 10 ppm) and left at rest at 37°C for 24 hours. As a negative control and a positive control, sterilized water and erythromycin (solution at a concentration of 2,000 ppm in ethanol) were added instead of the sample.

(4) Judgment

From the test tube left at rest at 37°C for 24 hours, a loopful of the culture fluid was collected and smeared on a Mueller Hinton agar medium. After culturing at 37°C for 2 days, formation of colonies on the agar medium and its degree were judged.

As a result, on the negative control culture medium to which sterilized water was added, a large number of colonies ($3 \times 10^8$ cfu/ml) were formed. On the other hand, on the culture medium to which samples (Terpenoid-1 and/or Terpenoid-2) were added and on the positive control culture medium, no formation of colonies was confirmed. From these results, Terpenoid-1 and Terpenoid-2 were found to have excellent antibacterial activity.

EXPERIMENTAL EXAMPLE 2

(Fractionation of extract components)

In the same manner as in Experimental Example 1, 902 mg of a powdery water-insoluble rosemary extract was obtained, which was dissolved in a small amount of acetonitrile, and the solution was injected into a column (30 mm in diameter × 120 mm) filled with 30 g of ODS (octadecylsilyl silica gel), and then eluted by a step gradient method using water/acetonitrile mixed liquids. The mixing ratios of the eluents were such that water/acetonitrile (volume ratio)=80:20, 60:40, 40:60, 20:80 and 0:100, in an amount of 150 ml each. Then, 150 ml of chloroform was made to flow through the column, and further 150 ml of methanol was made to flow.

The eluates with water/acetonitrile (volume ratio)=60:40, 40:60 and 20:80 were subjected to fractionation with silica gel thin layer chromatography (TLC), and the respective components were analyzed by NMR ($^1$H-NMR) and identified as shown in Table 1.

All the eluates with acetonitrile (100%), chloroform and methanol were mixed and concentrated to dryness, and further subjected to the following fractionation by silica gel. That is, the dried residue was dissolved in chloroform and injected into a column filled with 15 g of a silica gel, and eluated by a step gradient method with chloroform/methanol mixed liquids. The mixing ratios of the eluates were such that chloroform/methanol (volume ratio)=100:0, 99:1, 98:2, 97:3, 96:4, 95:5 and 0:100, in an amount of 150 ml each.

Each eluate was concentrated to dryness and further subjected to fractionation by high performance liquid chromatography (HPLC). For HPLC, an ODS column was used, and a water/methanol mixed solution (volume ratio 10:90) was used. Dried residues of the eluates with chloroform/methanol (volume ratio)=98:2, 96:4 and 0:100 were analyzed by NMR ($^1$H-NMR) and identified as shown in Table 1.

TABLE 1

| Column | Composition of eluate (volume ratio) | | Fraction No. | Fraction component | Amount collected (mg) |
|---|---|---|---|---|---|
| ODS | Water 60 | Acetonitrile 40 | 1 | Rosmanol | 3.6 |
| | | | | Epirosmanol | 1.6 |
| | Water 40 | Acetonitrile 60 | 2 | 7α-ethoxyrosmanol | 5.6 |
| | | | | Carnosol | 14.5 |
| | Water 20 | Acetonitrile 80 | 3 | Carnosol | 2.7 |
| | | | | 12-methoxy-trans-carnosic acid | 3.0 |
| Silica gel | Chloroform 98 | Methanol 2 | 4 | Betulinic acid | 5.2 |
| | Chloroform 96 | Methanol 4 | 5 | Betuline | 4.4 |
| | Chloroform 0 | Methanol 100 | 6 | Terpenoid-1 | 4.8 |
| | | | | Terpenoid-2 | 2.3 |

(Antibacterial activity against *Listeria monocytogenes*)

The above obtained isolated components were diluted with dimethylsulfoxide (manufactured by KANTO CHEMICAL CO., INC.) to prepare three test liquids at fraction concentrations (wt%) of 2%, 1% and 0.5%. As positive controls, erythromycin (manufactured by Wako Pure Chemical Industries Ltd.) was dissolved in ethanol (Junsei Chemical Co., Ltd.) to have a concentration of 1,000 ppm, 500 ppm or 250 ppm. As a negative control, sterilized water was used.

The antibacterial test was carried out by using *Listeria monocytogenes* ATCC49594 as follows.

(1) 8.9 ml of a brain heart infusion (BHI) culture medium (manufactured by NISSUI PHARMACEUTICAL CO., LTD.) was put in a test tube and treated in an autoclave (manufactured by TOMY SEIKO CO., LTD., TOMY BS-325). The culture medium concentration was adjusted to achieve a specified concentration when 0.1 ml of the above test liquid was added.

(2) Preparation of bacteria liquid

*Listeria monocytogenes* ATCC 49594 was cultured in the BHI culture medium by shake culture at 37°C for 1 hour and diluted to an appropriate bacteria concentration ($2.0\times10^3$ cfu/ml) by the BHI culture medium.

(3) Antibacterial test

To the test tube in which 8.9 ml of the BHI culture medium prepared in the above (1) was put, 0.1 ml of the prepared test liquid and 1 ml of the bacteria liquid prepared in the above (2) were added, stirred and left at rest at 30°C for 24 hours.

(4) Evaluation of inhibitory ratio

The turbidity of the culture fluid in the test tube left at rest at 30°C for 24 hours was measured by a turbidimeter (manufactured by TAITEC CORPORATION, miniphoto 518R) at a wavelength of 660 nm. The inhibitory ratio was calculated from the following formula, where A is the turbidly in the case of a culture fluid to which 0.1 ml of dimethylsulfoxide was added instead of the test liquid.

$$\text{Inhibitory ratio (\%)}=[(A-[\text{turbidity of culture fluid}])/A]\times100$$

(5) Evaluation of bacteria growth

The culture fluid in the test tube left at rest at 30°C for 24 hours was diluted with a phosphate buffer solution (PBS) and smeared on a BHI agar medium. After culturing at 37°C for 24 hours, the number of bacteria on the agar medium was measured by observation with a microscope. With respect to the dilution with PBS, the culture fluid was preliminarily properly diluted within a range of from $10^2$ to $10^9$ times to such a concentration that the number of bacteria can be counted with a microscope 24 hour later (the number of bacteria 24 hours later was calibrated in accordance with the proportion preliminarily diluted with PBS).

The results of evaluation of the inhibitory ratio and the bacteria growth evaluation of the culture fluids containing

erythromycin, Terpenoid-1 and Terpenoid-2 are shown in Table 2. Erythromycin which is a synthetic antibacterial agent used as the positive control exhibited high antibacterial property within a concentration range of from 2.5 to 10 ppm. Terpenoid-1 and Terpenoid-2 from a natural extract are also confirmed to have antibacterial activity against *Listeria monocytogenes* at a concentration of 50 ppm or higher. Further, a remarkable antibacterial activity was exhibited by increasing the concentration of Terpenoid-1 or Terpenoid-2.

The results of the inhibitory ratio and the bacteria growth evaluated under the same conditions as for Terpenoid-1 and Terpenoid-2, with respect to extracted components other than Terpenoid-1 and Terpenoid-2, are shown in Table 3. As a result, all of 7$\alpha$-ethoxyrosmanol, carnosol, 12-methoxy-tarns-carnosic acid, rosmanol, epirosmanol and betulinic acid had low or no antibacterial activity against *Listeria monocytogenes.*

TABLE 2

| | | Concentration of added substance (ppm) | Turbidity of culture fluid | Inhibitory ratio (%) | Number of bacteria (cfu/ml) |
|---|---|---|---|---|---|
| Water | | --- | 0.566 | --- | $5.9\times10^{10}$ |
| Dimethylsulfoxide | | --- | 0.509 | Standard | $6.8\times10^{9}$ |
| Added substance | Erythromycin | 2.5 | 0.011 | 97.8 | $3.7\times10^{2}$ |
| | | 5 | 0.022 | 95.6 | $9.5\times10^{2}$ |
| | | 10 | -0.008 | 98.4 | $1.8\times10^{2}$ |
| | Terpenoid-1 | 50 | 0.485 | 4.6 | $3.8\times10^{9}$ |
| | | 100 | 0.290 | 43.0 | $1.6\times10^{9}$ |
| | | 200 | -0.003 | 100 | $3.8\times10^{6}$ |
| | Terpenoid-2 | 50 | 0.472 | 7.2 | $4.4\times10^{9}$ |
| | | 100 | 0.402 | 21.0 | $2.5\times10^{9}$ |
| | | 200 | 0.268 | 47.2 | $1.3\times10^{9}$ |

TABLE 3

| | | Concentration of added substance (ppm) | Inhibitory ratio (%) | Number of bacteria (cfu/ml) |
|---|---|---|---|---|
| Added substance | 7α-Ethoxyrosmanol | 50 | 4.0 | $2.5\times10^9$ |
| | | 100 | 0.5 | $3.6\times10^9$ |
| | | 200 | 2.6 | $3.8\times10^9$ |
| | Carnosol | 50 | 0.0 | $4.3\times10^9$ |
| | | 100 | 0.0 | $4.7\times10^9$ |
| | | 200 | 0.0 | $3.9\times10^9$ |
| | 12-Methoxy-tarns-carnosic acid | 50 | 11.8 | $3.1\times10^9$ |
| | | 100 | 17.7 | $4.1\times10^9$ |
| | | 200 | 20.6 | $4.3\times10^9$ |
| | Rosmanol | 50 | 10.2 | $3.9\times10^9$ |
| | | 100 | 5.1 | $3.7\times10^9$ |
| | | 200 | 16.0 | $3.9\times10^9$ |
| | Epirosmanol | 50 | 0.0 | $4.0\times10^9$ |
| | | 100 | 0.0 | $4.2\times10^9$ |
| | | 200 | 0.0 | $3.2\times10^9$ |
| | Betulinic acid | 50 | 0.0 | $4.0\times10^9$ |
| | | 100 | 0.0 | $4.5\times10^9$ |
| | | 200 | 0.0 | $3.0\times10^9$ |

INDUSTRIAL APPLICABILITY

The antibacterial agent used in the present invention can be obtained from natural products, has high antibacterial activity particularly against bacteria belonging to the genus *Listeria* with a small content, and is free from an unpleasant odor. Thus, it is useful as an antibacterial substance in wide fields including the fields of foods, beverage, medical and pharmaceutical supplies, and environmental safety.

Considering the energy reduction, the global environment planning, the population increase planning, the food problem, etc. in recent years, by using the antibacterial agent of the present invention, particularly decay of fresh foods and beverage can be suppressed, and it is possible to effectively utilize food and beverage. That is, the antibacterial agent used in the present invention is useful in various industrial fields such as livestock industry, marine products industry, food processing, food and beverage manufacturing, food and beverage selling, distribution, medical care and sanitation.

## Claims

1. Use of an antibacterial agent for disinfection of foods against bacteria belonging to the genus *Listeria,* wherein the antibacterial agent comprises as an active ingredient a compound represented by the following formula (2), extracted from rosemary

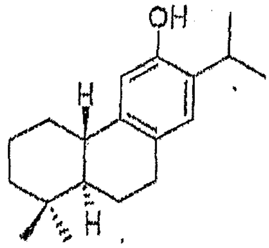

(2)

2. The use according to claim 1, wherein the antibacterial agent further comprises as an active ingredient a compound represented by the following formula (1),

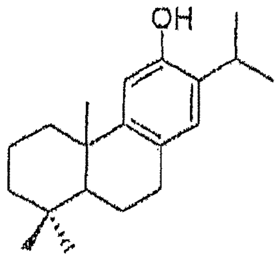

(1)

3. The use according to claim 1 or 2, wherein the concentration of the antibacterial agent added to a food is from 0.01 to 10,000 ppm, as the total amount of either one or both of the compounds represented by the above formulae (1) and (2).

4. The use according to any one of claims 2 or 3, wherein the compounds represented by the formulae (1) and (2) are contained in the antibacterial agent in an amount of at least 50 ppm.

5. The use according to any one of claims 2 or 3, wherein the total content of either one or both of the compounds represented by the formulae (1) and (2) in the antibacterial agent is at most 5 wt%.

6. The use according to any one of claims 2 to 5, wherein the compounds represented in the formulae (1) and (2) each have an antibacterial activity against *Listeria monocytogenes* at a concentration of 50 ppm.

7. The use according to any one of claims 1 to 6, wherein the antibacterial agent has the compound represented by the formula (2) dissolved or dispersed in water, an alcohol, edible fat oil, or a mixture thereof.

8. The use according to any one of claims 1 to 7, wherein the antibacterial agent further contains a hop extract.

**Patentansprüche**

1. Verwendung eines antibakteriellen Mittels zur Desinfektion von Nahrungsmitteln gegenüber Bakterien, welche zur Gattung *Listeria* gehören, wobei das antibakterielle Mittel als einen Wirkstoff eine durch die folgende Formel (2) wiedergegebene Verbindung, extrahiert aus Rosmarin, umfasst

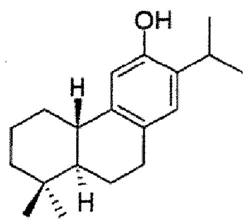

(2)

2. Verwendung nach Anspruch 1, wobei das antibakterielle Mittel weiterhin als einen Wirkstoff eine durch die folgende Formel (1) wiedergegebene Verbindung umfasst

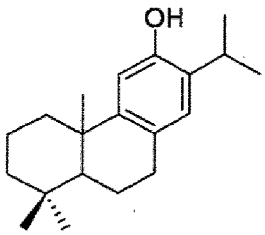

(1)

3. Verwendung nach Anspruch 1 oder 2, wobei die Konzentration des zu einem Nahrungsmittel gegebenen antibakteriellen Mittels 0,01 bis 10.000 ppm beträgt, angegeben als die Gesamtmenge von entweder einer oder beiden der durch die obigen Formeln (1) und (2) wiedergegeben Verbindungen.

4. Verwendung nach irgendeinem der Ansprüche 2 oder 3, wobei die durch die Formeln (1) und (2) wiedergegebenen Verbindungen in dem antibakteriellen Mittel in einer Menge von mindestens 50 ppm enthalten sind.

5. Verwendung nach irgendeinem der Ansprüche 2 oder 3, wobei der Gesamtgehalt von entweder einer oder beiden der durch die Formeln (1) und (2) wiedergegebenen Verbindungen in dem antibakteriellen Mittel höchstens 5 Gew.-% beträgt.

6. Verwendung nach irgendeinem der Ansprüche 2 bis 5, wobei die in den Formeln (1) und (2) wiedergegebenen Verbindungen jeweils eine antibakterielle Wirkung gegenüber *Listeria monocytogenes* bei einer Konzentration von 50 ppm aufweisen.

7. Verwendung nach irgendeinem der Ansprüche 1 bis 6, wobei das antibakterielle Mittel die durch die Formel (2) wiedergegebene Verbindung gelöst oder dispergiert in Wasser, einem Alkohol, essbarem Fettöl oder eine Mischung hiervon aufweist.

8. Verwendung nach irgendeinem der Ansprüche 1 bis 7, wobei das antibakterielle Mittel weiterhin einen Hopfenextrakt enthält.

**Revendications**

1. Usage d'un agent antibactérien pour la désinfection d'aliments contre les bactéries appartenant au genre *Listeria,* dans lequel l'agent antibactérien comprend, comme ingrédient actif, le composé représenté par la suivante formule (2), extrait de romarin

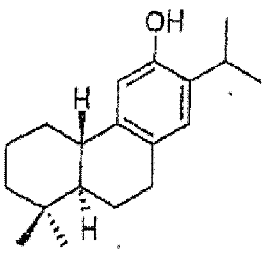

(2)

2. L'usage selon la revendication 1, dans lequel l'agent antibactérien comprend en outre comme un ingrédient actif un composé représenté par la suivante formule (1),

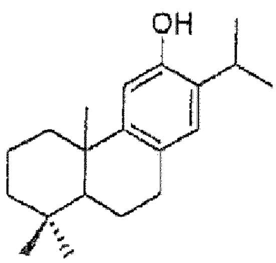

(1)

3. L'usage selon la revendication 1 ou 2, dans lequel la concentration de l'agent antibactérien ajouté à l'aliment est de 0,01 à 10.000 ppm, en tant que la quantité totale soit de l'un ou des deux des composés représentés par les formules (1) et (2) ci-dessus.

4. L'usage selon l'une quelconque des revendications 2 ou 3, dans lequel les composés représentés par les formules (1) et (2) sont contenu dans l'agent antibactérien en une quantité d'au moins 50 ppm.

5. L'usage selon l'une quelconque des revendications 2 ou 3, dans lequel la teneur totale soit de l'un ou des deux des composés représentés par les formules (1) et (2) dans l'agent antibactérien est de 5 % en poids au maximum.

6. L'usage selon l'une quelconque des revendications 2 à 5, dans lequel les composés représentés dans les formules (1) et (2) ont chacun une activité antibactérienne contre *Listeria monocytogenes* à une concentration de 50 ppm.

7. L'usage selon l'une quelconque des revendications 1 à 6, dans lequel l'agent antibactérien comporte le composé représenté par la formule (2) dissout ou dispersé dans de l'eau, un alcool, une huile graisse comestible, ou un mélange de ceux-ci.

8. L'usage selon l'une quelconque des revendications 1 à 7, dans lequel l'agent antibactérien en outre contient un extrait de houblon.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8502887 A

### Non-patent literature cited in the description


- **M.POLITI et al.** Antimicrobial Diterpenes from the Seeds of Cephalotaxus harringtonia var. drupacea. *PLANTA MEDICA,* 01 May 2003, vol. 69, 468-470
- **KOBAYASHI KOJI et al.** Antibacterial activity of pisiferic acid and its derivatives against gram-negative and -positive bacteria. *AGRICULTURAL AND BIOLOGICAL CHEMISTRY,* 1988, vol. 52 (IS.1), 77-83
- **ULUBELEN A et al.** Diterpenoids from the roots of Salvia bracteata. *PHYTOCHEMISTRY,* 01 December 1999, vol. 52 (8), 1455-1459
- **TOPCU GULACTI et al.** Biological activity of diterpenoids isolated from Anatolian Lamiaceae Plants. *RECORDS OF NATURAL PRODUCTS,* 2007, vol. 1 (IS.1), 1-16
- **MIKRE et al.** Volatile constituents and antioxidant activity of essential oils obtained from important aromatic plants of Ethiopia. *JOURNAL OF ESSENTIAL OIL BEARING PLANTS,* 2007, vol. 10 (6), 465-474
- **S. VELANI ; R. J. GILBERT.** Prepacked Ready-To-Eat Sliced Meat. *PHLS Microbiology Digest,* 1977, vol. 7